Europäisches Patentamt

European Patent Office

Office européen des brevets

(19)

(11) Veröffentlichungsnummer: **0 030 011**

**A1**

## (12) EUROPÄISCHE PATENTANMELDUNG

(21) Anmeldenummer: 80107416.2

(22) Anmeldetag: 27.11.80

(51) Int. Cl.³: **B 08 B 9/00**
**C 02 F 1/32**

(30) Priorität: 28.11.79 DE 2947891

(43) Veröffentlichungstag der Anmeldung:
10.06.81 Patentblatt 81/23

(84) Benannte Vertragsstaaten:
AT BE CH FR GB IT LI LU NL SE

(71) Anmelder: H E S - GmbH
Hydraulik-Elektrobau-Schotten und Co. KG

D-6479 Schotten 1(DE)

(72) Erfinder: Ziegs, Johannes
Bussardstrasse 12
D-6078 Neu Isenburg(DE)

(72) Erfinder: Boscher, Jörg, Dr.
Am Kalkofen 23
D-6237 Liederbach(DE)

(72) Erfinder: Jessl, Peter
Wässerigter Weg 5
D-6365 Rosbach 3(DE)

(72) Erfinder: Schmauch, Lothar
Kurhessenstrasse 72
D-6000 Frankfurt am Main 50(DE)

(72) Erfinder: Frei, Hans-Joachim
Erlenbruchweg 1
D-6486 Brachttal 3(DE)

(72) Erfinder: Wolf, Karl
Ludwigstrasse 61
D-6450 Hanau 7(DE)

(74) Vertreter: Keil, Rainer, Dipl.-Phys.
Patentanwälte MERTENS & KEIL Ammelburgstrasse 34
D-6000 Frankfurt am Main(DE)

(54) Reinigungsverfahren für innere Oberflächen von Hohlkörpern.

(57) Die Erfindung bezieht sich auf ein Verfahren zur mechanischen Reinigung der inneren Oberflächen von Hohlkörpern, das ohne großen Zeit- und Kostenaufwand auch aufgrund der Gestalt schwer zugänglicher innerer Oberflächen, auch bei Fehlen einer Sichtkontrolle, eine gleichmäßige Reinigung gestattet. Hierzu wird in dem Hohlkörper eine schraubenförmige Flüssigkeitsströmung erzeugt und der Flüssigkeit wenigstens eine Granulatsorte zugesetzt, deren Teilchen ein kleineres oder größeres spezifisches Gewicht als die Flüssigkeit und einen Durchmesser kleiner als die engste Stelle des Hohlkörpers und der Zu- und Ableitungen besitzen.

./...

Fig. 1

H E S - GmbH
Hydraulik-Elektrobau-Schotten und Co. KG
6479 Schotten 1

"Reinigungsverfahren für innere Oberflächen von Hohlkörpern"

Die Erfindung bezieht sich auf ein Verfahren zum mechanischen Reinigen der inneren Oberflächen von Hohlkörpern, insbesondere solchen mit ringförmigem, z.B. kreisringförmigen oder ähnlichem Querschnitt.

Bei der mechanischen Reinigung von weitgehend geschlossenen Hohlkörpern besteht das Problem, daß innere Oberflächen nur schwer oder gar nicht mit einem Reinigungswerkzeug zu erreichen sind. Das gilt insbesondere für Hohlkörper, die sehr lang sind, Knicke und Krümmungen veränderlichen Querschnitt oder zurückspringende Flächenabschnitte besitzen.

Es sind hierzu Reinigungsverfahren vorgeschlagen worden, bei denen ein starres oder flexibles Reinigungswerkzeug in den Hohlkörper eingeführt und in ihm hin- und herbewegt wird. Die reinigende Wirkung wird dabei aber nur an den Stellen erzielt, die in mechanischen Kontakt mit dem Reinigungswerkzeug gelangen. Falls der Körper veränderlichen Querschnitt besitzt oder Krümmungen aufweist, so ist insbesondere bei fehlender Sichtkontrolle des Reinigungsvorganges und seiner Wirkung eine gleichmäßige Oberflächenreinigung nicht gewährleistet.

Man könnte auch so verfahren, daß ein verformbarer Körper mit geeigneten Durchmessern durch den Hohlkörper gepreßt

- 2 -

wird. Diese Methode wäre jedoch sehr zeitaufwendig und
nicht anwendbar, wenn sich der Querschnitt des Hohlkörpers
stark entlang der Bewegungsachse des verformbaren Körpers
verändert, z.B. trichterförmig verengt.

Der vorliegenden Erfindung liegt die Aufgabe zugrunde,
ein Reinigungsverfahren ohne die zuvor genannten Nachteile
vorzuschlagen, welches bei Hohlkörpern, insbesondere solchen
mit ringförmigem, z.B. kreisringförmigem oder ähnlich kompliziertem Querschnitt, jedoch sonst beliebiger Gestalt, auch
bei fehlender Sichtkontrolle eine gleichmäßige Reinigung
der inneren Oberflächen ermöglicht.

Diese Aufgabe wird erfindungsgemäß dadurch gelöst, daß
in dem Hohlkörper eine schraubenförmige Flüssigkeitsströmung
erzeugt und daß der Flüssigkeit wenigstens eine Granulatsorte
zugesetzt wird, deren Teilchen ein kleineres oder größeres
spezifisches Gewicht als die Flüssigkeit und einen Durchmesser kleiner als die engste Stelle des Hohlkörpers und
der Zu- und Ableitungen besitzen.

Die der Erfindung zugrundeliegende Aufgabe wird damit in
überraschend einfacher Weise gelöst. Erfindungsgemäß wird
in dem beispielsweise hohlzylindrisch ausgebildeten Hohlkörper eine die Längsachse schraubenförmig umfassende Flüssigkeitsströmung erzeugt. Dem Flüssigkeitsstrom wird ein Granulat zugesetzt, das folgende Eigenschaften besitzt:

1. Der Teilchendurchmesser ist kleiner als die lichte
   Weite an der engsten Stelle des Hohlkörpers bzw. des
   Zu- und Ableitungssystems.

2. Das spezifische Gewicht der das Granulat bildenden
   Granulatsorte ist entweder kleiner als das der Flüssigkeit, oder

3. das spezifische Gewicht der das Granulat bildenden Granulatsorte ist größer als das der Flüssigkeit, oder

4. das Granulat ist ein Gemenge aus wenigstens zwei Granulatsorten, wobei die Teilchen der einen Granulatsorte ein kleineres spezifisches Gewicht und die Teilchen der anderen Granulatsorte ein größeres spezifisches Gewicht als das der Flüssigkeit haben.

In der rotierenden Flüssigkeit bildet sich als Folge der Trägheitskräfte ein radialer Druckanstieg aus. Auf das von der Flüssigkeit mitgeführte Granulat wirkt daher außer der nach außen gerichteten Zentrifugalkraft zusätzlich eine radial nach innen gerichtete Auftriebskraft. Für eine Granulatsorte, deren spezifisches Gewicht größer als das der Flüssigkeit ist, überwiegt die Zentrifugalkraft die Auftriebskraft. Dadurch wird diese Granulatsorte in der Strömung radial nach außen getrieben und an die innere Oberfläche der Außenwand des Hohlkörpers gedrückt. Gleichzeitig wirken infolge der Flüssigkeitsrotation tangentiale Kräfte auf das Granulat. Die einzelnen Körner beschreiben also schraubenlinienförmige Bahnen auf der inneren Oberfläche der Außenwand. Für eine Granulatsorte, deren spezifisches Gewicht kleiner als das der Flüssigkeit ist, überwiegt die Auftriebskraft die Zentrifugalkraft. Dadurch werden die entsprechenden Granulatkörner in die Mitte der Anordnung getrieben und beschreiben schraubenlinienförmige Bahnen auf der äußeren, also dem Innenraum des Hohlkörpers zugewandten Oberfläche einer Innenwand des Hohlkörpers. In beiden Fällen entsteht eine reinigende Wirkung auf die inneren Hohlkörperoberflächen durch Reibung zwischen Granulat und Wänden infolge der radial gerichteten Andruckkräfte. Besteht also das Granulat aus einem Gemenge aus zwei Granulatsorten der oben genannten unterschiedlichen spezifischen Gewichte, werden gleichzeitig die inneren Oberflächen von Innenwand und Außenwand gereinigt.

Die Größe der Reibungskräfte ist gegeben durch das Produkt aus der jeweiligen Andruckkraft (Normalkraft) und dem mittleren Reibungskoeffizienten. Sie hängt damit im wesentlichen von der Größe der Andruckkräfte, der Form und Oberflächenbeschaffenheit der Granulatkörner sowie den Oberflächeneigenschaften des Wandbelags ab. Für beide Granulatsorten ist die Andruckkraft bei gegebener geometrischer Anordnung umso größer, je größer die Rotationsgeschwindigkeit der Flüssigkeit, das Volumen der Granulatkörner und der absolute Betrag der Differenz der spezifischen Gewichte von Granulat und Flüssigkeit sind. Der mittlere Reibungskoeffizient ist bei gegebenem Wandbelag abhängig von der Form und Oberflächenbeschaffenheit der Granulatkörner. Er ist umso größer, je unregelmäßiger und rauher die Oberfläche der Granulatteilchen ist.

Weitere Merkmale, Vorteile und Anwendungsmöglichkeiten der Erfindung ergeben sich aus den Unteransprüchen und aus der nachfolgenden Beschreibung eines Ausführungsbeispiels anhand der beiliegenden Zeichnung.

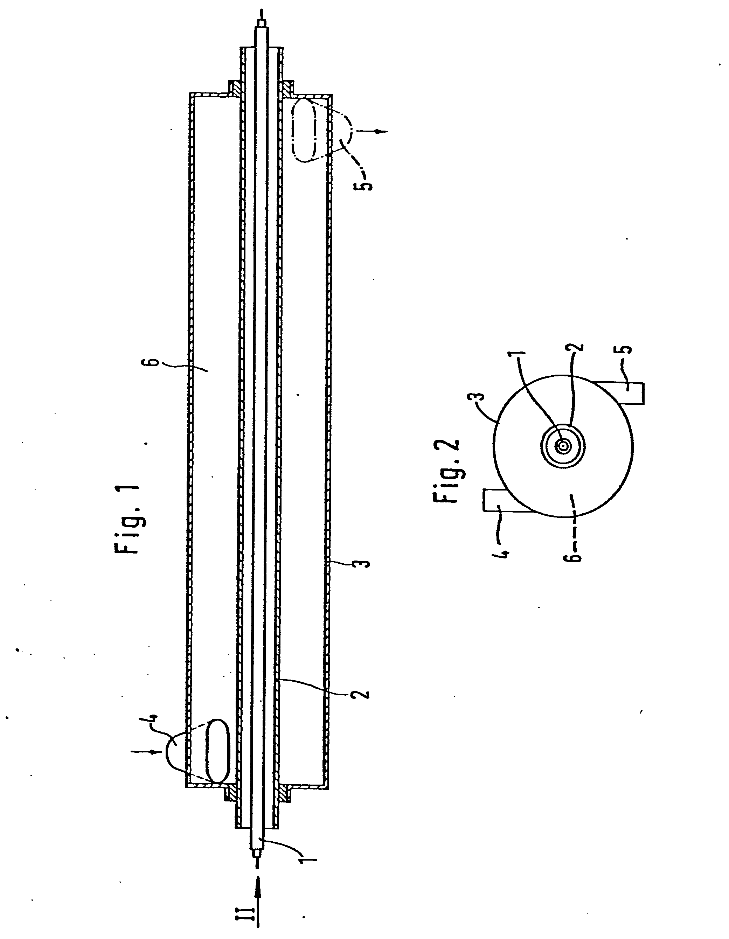

Figur 1 zeigt schematisch im Längsschnitt eine UV-Wasserentkeimungsanlage, Figur 2 eine Stirnansicht gemäß Pfeilrichtung II von Fig. 1.

Die UV-Wasserentkeimungsanlage weist eine konzentrisch in einem Quarzglaszylinder 2 gehaltene, kreiszylinderförmige Quecksilber-Niederdrucklampe 1 auf. Der Quarzglaszylinder 2 ist seinerseits konzentrisch in einer von einer, z.B. metallischen Außenwand 3, begrenzten Entkeimungskammer 6 aufgenommen. Die Entkeimungskammer 6 bildet dadurch einen axial langgestreckten Hohlraum mit kreisringförmigem Querschnitt. Das zu entkeimende Wasser wird in der Entkeimungskammer 6 benachbart deren einem Ende über einen Stutzen 4 zugeführt, durchströmt den von dem Quarzglaszylinder 2 und der Außenwand 3 gebildeten Hohlzylinder und wird über einen zweiten, dem Stutzen 4 am anderen Ende der Entkeimungskammer 6 diametral gegenüberliegenden Stutzen 5 wieder abgeleitet.

Nach Standzeiten der Anlage ist es erforderlich, die inneren
Oberflächen der Entkeimungskammer 6 von Ablagerungen, wie
z.B. Schmutz, Algen oder dgl. zu befreien. Die Sauberkeit
der äußeren Oberfläche des Quarzglaszylinders 2 ist von
besonderer Wichtigkeit, da durch diese das Wasser entkeimende
UV-Strahlung hindurchtreten soll. Darüberhinaus ist es
wünschenswert, den Reinigungsvorgang bereits während des
Betriebes, der Anlage nach ihrem eigentlichen Verwendungszweck, nämlich der Entkeimung des Wassers z.B. von Schwimmbadanlagen mittels UV-Strahlung, auszuführen, und bereits
dabei dem Entstehen von Ablagerungen und Belägen vorzubeugen,
damit die Entkeimungswirkung während des Betriebs nicht
nachläßt.

Diese Ziele werden mit dem erfindungsgemäßen Verfahren
in einfacher und wirkungsvoller Weise erreicht. Der Wassereinlaßstutzen 4 ist räumlich so angeordnet, gestellt und/oder
geformt, daß in der Entkeimungskammer 6 eine solche turbulente Strömung erzeugt wird, die den inneren Quarzglaszylinder 2 schraubenlinienförmig umfaßt. Vor dem Eintritt
in die Anlage wird dem Wasser ein Gemenge von z.B. zwei
Granulatsorten zugesetzt. Die eine Granulatsorte besteht
z.B. aus unregelmäßig geformten Teilchen aus einem Kunst-
oder Naturstoff, z.B. Styrolpolymerisat bzw. -copolymerisat,
dessen spezifisches Gewicht kleiner als das des Wassers
ist. Die andere Granulatsorte bildet unregelmäßig geformte
Körper aus einem anderen Kunst- oder Naturstoff, z.B. Hartgummi, dessen spezifisches Gewicht größer als das des Wassers
ist. Der mittlere Durchmesser der Granulatkörner kann etwa
ein Viertel des Abstandes zwischen Quarzglaszylinder 2
und Außenmantel 3 betragen. Beim Durchlaufen der Entkeimungs-

L1jc

kammer 6 bewirken die beiden im Wasser aufgenommenen Granulatsorten in der oben geschilderten Weise die Reinigung der
Außenfläche des Quarzglaszylinders 2 und der Innenfläche
des Außenmantels 3. Danach tritt das Granulat mit dem Wasserstrom aus der Entkeimungskammer 6 aus.

In einer besonders vorteilhaften Ausgestaltung durchläuft
das Granulat in einem geschlossenen Kreislauf kontinuierlich
die Anlage während des Entkeimungsbetriebes. Dazu wird
das Granulat über einen Injektor dem Wasserstrom vor dem
Einlauf in die Entkeimungskammer 6 zugesetzt, hinter dem
Ausfluß an der Entkeimungskammer 6 durch ein Gitter abgeschieden und über eine Nebenschlußleitung zum Injektor
zurückgeführt. Auf diese Weise kann erreicht werden, daß
sich während des Betriebes keine Ablagerungen an den innenliegenden und außenliegenden inneren Oberflächen der Entkeimungskammer 6 bilden. Das in der UV-Wasserentkeimungsanlage durch UV-Bestrahlung zu entkeimende Wasser kann
dabei selbst als Trägermittel für das Granulat zur Ausführung des Reinigungsverfahrens ausgenutzt werden.

0030011

MERTENS & KEIL
PATENTANWÄLTE

Bezugszeichenliste:

1    Quecksilber-Niederdrucklampe
2    Quarzglaszylinder
3    Außenwand
4    Stutzen
5    Stutzen
6    Entkeimungskammer

**0030011**

## MERTENS & KEIL

### PATENTANWÄLTE

6000 Frankfurt am Main 1

26. November 1980
H 63 P 4 EP
K/Pn

H E S - GmbH
Hydraulik-Elektrobau-Schotten und Co. KG

6479 Schotten 1

"Reinigungsverfahren für innere Oberflächen
von Hohlkörpern"

1. Verfahren zum mechanischen Reinigen der inneren Oberflächen von Hohlkörpern, insbesondere solchen mit ringförmigem, z.B. kreisringförmigem oder ähnlichem Querschnitt, dadurch gekennzeichnet, daß in dem Hohlkörper eine schraubenförmige Flüssigkeitsströmung erzeugt und daß der Flüssigkeit wenigstens eine Granulatsorte zugesetzt wird, deren Teilchen ein kleineres oder größeres spezifisches Gewicht als die Flüssigkeit und einen Durchmesser kleiner als die engste Stelle des Hohlkörpers bzw. der Zu- und Ableitungen besitzen.

2. Verfahren nach Anspruch 1, dadurch gekennzeichnet, daß der Flüssigkeit wenigstens zwei Granulatsorten zugesetzt werden, wobei die Teilchen einer Granulatsorte ein kleineres spezifisches Gewicht und die Teilchen einer anderen Granulatsorte ein größeres spezifisches Gewicht als die Flüssigkeit besitzen.

**0030011**

## MERTENS & KEIL
### PATENTANWÄLTE

3.  Verfahren nach Anspruch 1 oder 2, dadurch gekennzeichnet, daß die Flüssigkeit Wasser ist und die eine Granulatsorte aus unregelmäßig geformten Teilchen aus Styrolpolymerisat oder -copolymerisat und die andere Granulatsorte aus unregelmäßig geformten Teilchen aus Hartgummi bestehen.

4.  Verfahren nach einem der Ansprüche 1 bis 3, dadurch
    gekennzeichnet, daß der zu reinigende Hohlkörper die
    Entkeimungskammer einer UV-Wasserentkeimungsanlage
    bildet, die von einer konzentrischen Anordnung eines
    eine UV-Lampe enthaltenden Quarzzylinders und eines
    zylindrischen Außenmantels begrenzt wird.

# Fig. 1

# Fig. 2

0030011

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 053 008 (OLSON)<br>* Spalte 1, Zeilen 1-13 *<br>-- | 1 |
| | US - A - 1 795 348 (SCHMIDT)<br>* Seite 1, Zeilen 63-73 *<br>-- | 1 |
| | FR - A - 2 206 978 (NATURVARD RESEARCH)<br>* Seite 1, Zeilen 1-7 *<br>----- | 4 |

**KLASSIFIKATION DER ANMELDUNG (Int. Cl.³)**

B 08 B 9/00
C 02 F 1/32

**RECHERCHIERTE SACHGEBIETE (Int. Cl.³)**

B 08 B
C 02 F
F 28 G

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-03-1981 | CLAEYS |

EPA form 1503.1  06.78